# FASCICULE DE BREVET EUROPEEN

(11) **EP 3 221 390 B1**
(45) Date de publication et mention de la délivrance du brevet: **05.09.2018**
(21) Numéro de dépôt: 15808728.8
(22) Date de dépôt: 17.11.2015
(51) Int. Cl.: C08J 5/18, C08K 5/053, C08L 3/02, C08L 3/04, C08L 67/02, C08L 67/04

(54) **COMPOSITION DE POLYESTER ET D'AMIDON THERMOPLASTIQUE AUX PROPRIÉTÉS MÉCANIQUES AMÉLIORÉES**
ZUSAMMENSETZUNG AUS POLYESTER UND THERMOPLASTISCHER STÄRKE MIT VERBESSERTEN MECHANISCHEN EIGENSCHAFTEN
COMPOSITION OF POLYESTER AND THERMOPLASTIC STARCH, HAVING IMPROVED MECHANICAL PROPERTIES

(30) Priorité: 17.11.2014 FR 1461080; 17.11.2014 FR 1461081; 17.11.2014 FR 1461082; 29.05.2015 FR 1554884
(43) Date de publication de la demande: 27.09.2017
(73) Titulaire: Roquette Frères, 62136 Lestrem (FR)
(72) Inventeur: MARCILLE, Sophie, 59000 Lille (FR); AMEDRO, Hélène, 62400 Bethune (FR); DESCAMPS, Nicolas, 59262 Sainghin-en-melantois (FR); BUCHE, Thomas, 62340 Andres (FR); SAINT-LOUP, René, 59160 Lomme (FR)
(74) Mandataire: Cabinet Plasseraud
(86) Numéro de dépôt international: PCT/FR2015/053100
(87) Numéro de publication internationale: WO 2016/079414

(56) Documents cités:
- EP-A1- 2 727 952
- US-B2- 7 820 276

## Description

### Domaine de l'invention

L'invention a pour objet une composition thermoplastique comprenant de l'amidon thermoplastique, un polyester aliphatique et au moins de l'acide citrique. L'invention a également pour objet un procédé de fabrication permettant la fabrication de ladite composition et un granulé de la composition.

### Arrière-plan technologique de l'invention

Du fait de leurs nombreux avantages, les matières plastiques sont devenues incontournables pour la fabrication en série d'objets. En effet, du fait de leur caractère thermoplastique, on peut fabriquer à cadence élevée toutes sortes d'objets à partir de ces polymères. Pour fabriquer ces objets, on utilise des petits morceaux de ces polymères thermoplastiques, généralement sous forme de granulés, que l'on fait fondre par l'apport de chaleur et de contraintes mécaniques dans des machines de mise en forme. Par exemple, on peut fabriquer du film en introduisant ces granulés dans une extrudeuse soufflage de gaine ou une extrudeuse à plat (en anglais « cast extrusion ») ou encore fabriquer des bouteilles en les introduisant dans une extrudeuse souffleuse. Ces granulés sont produits par granulation d'un jonc de polymère extrudé.

Ces objets sont généralement réalisés à partir de thermoplastiques non biodégradables, tels que les polyoléfines ou les polyamides. Cependant, ces plastiques sont encore aujourd'hui peu recyclés. Ainsi, cela pose des problèmes environnementaux car ils sont généralement incinérés et que cette incinération peut provoquer le dégagement de gaz toxiques. Ainsi, l'une des préoccupations importantes aujourd'hui dans le domaine des polymères est de fournir des polymères biodégradables ou du moins compostables.

Parmi les polymères biodégradables et/ou compostables, on peut citer les polyesters aliphatiques ou les polyesters semi-aliphatiques tels que le poly(butylène succinate) (PBS), le poly(butylène succinate-*co*-adipate) (PBSA), la poly-ε-caprolactone (pCAPA), l'acide polylactique (PLA) ou le poly(butylène adipate-*co*-téréphtalate) (PBAT) ainsi que les poly hydroxyalcanoates de type polyhydroxybutyrate (PHB) ou poly (hydroxy butyrate-*co-*valérate) (PHVB). Les polyesters aliphatiques et semi-aliphatiques ont généralement des températures de fusion proches de celles des polyoléfines, ce qui permet entre autres leur application dans les domaines des films et de l'emballage, dont la biodégradabilité est un avantage évident pour les applications mono-usages.

Toutefois, un des problèmes de ces polyesters est qu'ils sont relativement coûteux. Une des solutions envisagées pour fournir des compositions biodégradables plus économiques est de fabriquer des compositions à base d'amidon thermoplastique, celui-ci étant constitué d'amidon et de plastifiant de cet amidon tel que le glycérol. En effet, la fabrication de ces compositions est avantageuse car l'amidon est un des polymères biosourcés qui est naturellement le plus répandu dans l'environnement. Toutefois, ces amidons thermoplastiques présentent des propriétés insuffisantes, notamment en termes de tenue à l'eau. De plus, la transformation de l'amidon en amidon thermoplastique n'est pas aisée car elle nécessite l'utilisation de contraintes et/ou de températures importantes lors du mélange thermomécanique, ce qui a tendance à dégrader l'amidon thermoplastique ainsi formé.

Pour contrecarrer ces inconvénients, des compositions à base de polyesters aliphatiques ou semi-aliphatiques et d'amidon plastifié ont été développées. Dans ces compositions, la phase d'amidon thermoplastique est généralement dispersée dans la phase polyester. Ces compositions présentent de nombreux avantages comme par exemple pouvoir être compostable et/ou biodégradable et d'avoir une tenue à l'eau très améliorée par rapport à l'amidon thermoplastique. Ces compositions sont généralement fabriquées par extrusion. On obtient alors un jonc de mélange intime des deux polymères, ce jonc étant ensuite passé dans une granuleuse pour former des granulés. De telles compositions sont notamment décrites dans les documents EP 2727952 A1 et US 7820276 B2.

La Demanderesse a pu constater qu'un des problèmes des compositions à base d'amidon thermoplastique et de polyester aliphatique tel que le PBS ou le PBSA, est que l'amidon thermoplastique et ce polyester sont peu miscibles entre eux. Ceci aboutit à des problèmes d'hétérogénéité de la composition, en particulier lorsque la quantité d'amidon thermoplastique et/ou lorsque la quantité de plastifiant dans la composition sont importantes. Ceci pose des problèmes de stabilité du procédé et des compositions aux propriétés qui ne sont pas totalement satisfaisantes. Par exemple, lorsque l'on fabrique ces compositions par extrusion, on obtient en sortie d'extrudeuse un jonc de polymère qui peut présenter une hétérogénéité visible, liée à la présence d'amidon thermoplastique et de polyester sous forme de domaines de taille importante.

La Demanderesse est parvenue à fournir de nouvelles compositions permettant de surmonter ces problèmes.

### Résumé de l'invention

L'invention a ainsi pour objet une composition comprenant :
- au moins un polyester (A) aliphatique comprenant des diols contenant au moins l'éthylène glycol, le 1,4-butanediol ou leurs mélanges et des diacides contenant au moins l'acide succinique, l'acide adipique ou leurs mélanges ;
- au moins un amidon (B) ;
- au moins un plastifiant organique (C) de l'amidon ;
- optionnellement un ou plusieurs polyesters additionnels (D) différents du polyester (A) ;
dans laquelle la composition comprend en outre de l'acide citrique (E), la quantité massique d'acide citrique allant de 0,01 à 0,45 part, ces quantités massiques étant exprimées par rapport à 100 parts de la matière sèche totale de (A), (B), (C) et (D).

La Demanderesse a pu constater que lorsque des compositions à base d'amidon thermoplastique et dudit polyester aliphatique (A) comprennent l'acide citrique dans ces proportions particulières, elles présentent une homogénéité plus importante que les compositions exemptes de ce composé.

De plus, la Demanderesse a pu constater que lorsque l'on extrude une composition de ce type, mais comprenant ce composé (E) dans des proportions de 0,5 part ou plus, ce jonc devient alors difficile à granuler. Lors de la granulation, ce jonc a alors tendance à former des chapelets de granulés, c'est-à-dire des granulés agglomérés entre eux, et non des granulés distincts.

Le document *Influence of Citric Acid on the Properties of Glycerol-plasticized dry Starch (DTPS) and DTPS*/*Poly(lactic acid) Blends* décrit des compositions comprenant de l'acide polylactique, de l'amidon thermoplastique ainsi que de l'acide citrique, dans des proportions généralement bien supérieures à celles des compositions selon l'invention. Les compositions extrudées décrites dans ce document ne sont pas granulées.

### Brève description des Figures

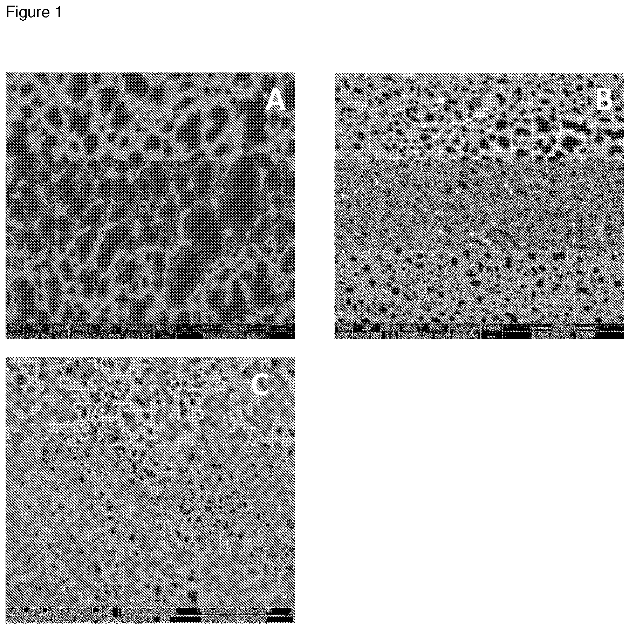

La Figure 1 représente les morphologies, obtenues par Microscopie Electronique à Balayage de compositions selon l'invention et comparatives. Ces compositions ont été réalisées selon le protocole décrit dans la partie Exemples ; l'image A est la composition de l'exemple 1 (comparatif), l'image B celle de l'exemple 3 (selon l'invention) et l'image C celle de l'exemple 7 (comparatif). Ces clichés ont été réalisés après avoir extrait l'amidon thermoplastique en plongeant les compositions dans de l'acide chlorhydrique. Les tâches sombres correspondent aux canaux d'amidon thermoplastique qui ont été extraits alors que les zones claires représentent la phase polyester restante.

### Description détaillée de l'invention

L'invention a pour objet une composition thermoplastique à base de polyester (A) aliphatique particulier, d'amidon (B), de plastifiant (C) et d'acide citrique (E).

Une composition thermoplastique est une composition qui, de manière réversible, se ramollit sous l'action de la chaleur et se durcit en se refroidissant à température ambiante. Elle présente au moins une température de transition vitreuse (Tg) en dessous de laquelle la fraction amorphe de la composition est à l'état vitreux cassant, et au-dessus de laquelle la composition peut subir des déformations plastiques réversibles. La température de transition vitreuse ou l'une, au moins, des températures de transition vitreuse de la composition thermoplastique à base d'amidon de la présente invention est de préférence comprise entre -150°C et 40°C. Cette composition à base d'amidon peut, bien entendu, être mise en forme par les procédés utilisés traditionnellement en plasturgie, tels que l'extrusion, l'injection, le moulage, le soufflage et le calandrage. Sa viscosité, mesurée à une température de 100°C à 200°C, est généralement comprise entre 10 et 10⁶Pa.s.

La composition selon l'invention présente en outre l'avantage de pouvoir être biodégradable.

La composition selon l'invention comprend au moins un polyester aliphatique, qui est un polyester qui comprend des monomères non aromatiques exclusivement. Par « comprendre des monomères », on entend que le polyester est susceptible d'être obtenu par polycondensation de ces monomères. Par exemple, si le polyester comprend de l'acide succinique et du 1,4-butanediol, cela signifie qu'il est susceptible d'être obtenu par polycondensation de monomères comprenant de l'acide succinique et du 1,4-butanediol. Il est également précisé que lorsqu'il est indiqué que le polyester comprend x% d'un monomère (X), cela signifie qu'il est susceptible d'être obtenu à partir d'un mélange de monomères comprenant, par rapport à la masse totale des monomères, x% de monomère (X).

Le polyester aliphatique (A) comprend au moins des diols comprenant l'éthylène glycol, le 1,4-butanediol ou leur mélange et des diacides comprenant au moins l'acide succinique, l'acide adipique ou leur mélange. Les polyesters peuvent également être obtenus à partir des esters, des anhydrides ou les chlorures de ces diacides.

Le polyester (A) utile à l'invention peut également comprendre des monomères non aromatiques additionnels. Il peut notamment s'agir de polyols aliphatiques additionnels, par exemple des diols aliphatiques, de préférence des diols aliphatiques linéaires saturés. Comme diol aliphatique linéaire additionnel, on peut citer le 1,3-propanediol, le 1,5-pentanediol, le 1,6-hexanediol, le 1,8-octanediol, le 1,10-decanediol ou un mélange de ces diols. Ils peuvent également comprendre des polyacides aliphatiques additionnels, par exemple des diacides aliphatiques, de préférence des diacides aliphatiques saturés. A titre d'exemple, ces diacides peuvent être l'acide glutarique, l'acide pimélique, l'acide subérique, l'acide azélaïque, l'acide sébacique ou un mélange de ces diacides. Il peut également s'agir de monomères porteurs d'au moins une fonction acide carboxylique et au moins une fonction alcool, généralement des hydroxyacides. A titre d'exemple, les hydroxyacides peuvent comprendre de l'acide glycolique ou du glycolide, l'acide lactique ou du lactide, l'acide hydroxybutyrique, l'acide hydroxycaproique, l'acide hydroxyvalérique, l'acide 7-hydroxyheptanoïque, l'acide 8-hydroxyoctanoïque, l'acide 9-hydroxynonanoïque ou un mélange de ces hydroxyacides.

Par rapport à la masse totale du polyester (A), la masse totale d'éthylène glycol, de 1,4-butanediol, d'acide succinique et/ou d'acide adipique dépasse avantageusement 90%.

De préférence, le polyester aliphatique (A) comprend du 1,4-butanediol et de l'acide succinique et/ou de l'acide adipique. Le polyester (A) est tout préférentiellement choisi parmi le PBS et le PBSA.

Selon une variante, la composition comprend en outre un polyester additionnel (D), différent du polyester (A) ou un mélange de polyesters additionnels (D).

Le polyester additionnel (D), différent du polyester (A), peut notamment être tout type de polyester aliphatique, dans la mesure où il n'est pas un polyester aliphatique qui comprend du 1,4-butanediol et de l'acide succinique et/ou de l'acide adipique, ou tout type de polyester semi-aliphatique. Le polyester aliphatique additionnel est susceptible d'être obtenu à partir de monomères non aromatiques, lesdits monomères étant choisis parmi les polyols aliphatiques, les polyacides aliphatiques et les monomères aliphatiques porteurs d'au moins une fonction acide carboxylique et au moins une fonction alcool. Ces monomères non aromatiques peuvent être linéaires, cycloaliphatiques ou ramifiés. Il est également possible d'obtenir ces polyesters par des voies enzymatiques ou fermentaires comme dans le cas des poly hydroxyalcanoates.

Ces polyols aliphatiques sont généralement des diols aliphatiques, de préférence des diols aliphatiques linéaires saturés. Comme diol aliphatique linéaire, on peut citer l'éthylène glycol, 1,3-propanediol, 1,4-butanediol, 1,5-pentanediol, 1,6-hexanediol, 1,8-octanediol, 1,10-decanediol ou un mélange de ces diols aliphatiques.

Les polyacides aliphatiques sont généralement des diacides aliphatiques, de préférence des diacides aliphatiques saturés. A titre d'exemple, ces diacides aliphatiques peuvent être de l'acide succinique, l'acide glutarique, l'acide adipique, l'acide pimélique, l'acide subérique, l'acide azélaïque, l'acide sébacique ou un mélange de ces diacides.

Les monomères porteurs d'au moins une fonction acide carboxylique et au moins une fonction alcool sont généralement des hydroxyacides. A titre d'exemple, les hydroxyacides peuvent être de l'acide glycolique, l'acide lactique, l'acide hydroxybutyrique, l'acide hydroxycaproique, l'acide hydroxyvalérique, l'acide 7-hydroxyheptanoïque, l'acide 8-hydroxyoctanoïque, l'acide 9-hydroxynonanoïque ou un mélange de ces hydroxyacides. Les polyesters peuvent également être obtenus à partir de dilactone telle que le glycolide, le lactide ou de lactone telle que la caprolactone.

Un polyester semi-aliphatique comprend quant à lui, en plus des monomères aliphatiques précédemment cités, au moins un monomère aromatique qui peut être un polyol, un polyacide ou un monomère porteur d'au moins une fonction acide carboxylique et au moins une fonction alcool. Celui-ci peut notamment être un polyacide aromatique, avantageusement un diacide aromatique l'acide téréphtalique ou l'acide furanique, de préférence l'acide téréphtalique. Les polyesters peuvent également être obtenus à partir des esters ou les chlorures de ces polyacides. On considère généralement qu'un polyester semi-aliphatique comprend, par rapport à la totalité des monomères de 50,1 à 99,9% molaire de monomères aliphatiques. Le polyester semi-aliphatique peut notamment être un copolymère comprenant du butanediol-1,4, de l'acide adipique et de l'acide téréphtalique (PBAT).

Le polyester additionnel (D) est préférentiellement l'acide polylactique (PLA). De préférence, cet acide polylactique est un acide polylactique semi-cristallin L'acide polylactique est généralement obtenu par polymérisation de lactide, par ouverture de cycle. Le lactide peut être sous la forme de D-lactide, de L-lactide ou encore sous la forme de méso-lactide. La cristallinité de l'acide polylactique est principalement contrôlée par les quantités de D-lactide et de L-lactide et dans une moindre mesure par le type de catalyseur utilisé. Ainsi, la polymérisation d'un mélange racémique de L-lactide et de D-lactide mène généralement à la synthèse d'un acide polylactique amorphe, tandis que la polymérisation de D-lactide pur ou de L-lactide pur mène à la synthèse d'un acide polylactique semi-cristallin. Un procédé de synthèse utilisant un mélange racémique peut également mener à un PLA hétérotactique présentant de la cristallinité en utilisant des catalyseurs stéréospécifiques. De préférence, l'acide polylactique présente une cristallinité ou taux de cristallinité allant de 30 à 75%, tout préférentiellement de 40 à 60%.

On peut déterminer le taux de cristallinité du PLA par analyse calorimétrique différentielle à balayage sur la base du calcul du rapport des valeurs de saut de Cp à Tg du produit semi-cristallin que l'on cherche à caractériser et du même produit rendu totalement amorphe.

Selon la variante où la composition comprend un mélange de polyesters (A) et (D), le pourcentage massique de (D) par rapport à la masse de (A) et (D), exprimé en masse sèche, va avantageusement va de 2 à 70%, avantageusement de 10 à 50%, de préférence de 18 à 30%. Selon un autre mode de réalisation, le pourcentage massique de (D) par rapport à la masse de (A) et (D) est faible, c'est-à-dire que ce pourcentage massique, exprimé en masse sèche, va de 2 à 20%, avantageusement selon ce mode de 3 à 15%, par exemple de 4 à 10%.

Les différents constituants de la composition, notamment l'amidon, ainsi que la composition obtenue, peuvent comprendre de l'humidité. Les proportions massiques peuvent être exprimées dans la présente demande soit en « masse sèche », c'est-à-dire que l'eau éventuellement comprise dans les constituants ou la composition n'est pas prise en considération pour le calcul de la proportion massique, soit en « masse humide », c'est-à-dire que l'eau éventuellement comprise dans les constituants ou la composition est prise en considération pour le calcul de la proportion massique.

Selon cette variante, et en particulier selon ces sous-variantes préférées, il est possible de fabriquer des films à partir de cette composition, par extrusion soufflage de gaine, en utilisant des cadences de production particulièrement élevées.

De préférence, le polyester ou les polyesters (A) et (D) présente(nt) un indice de fluidité allant de 0,1 à 50 g/10 min, avantageusement de 0,5 à 15 g/10 min (ISO1133, 190°C, 2,16 kg).

La composition selon l'invention comprend en outre de l'amidon (B) et un plastifiant organique de l'amidon (C), les deux formant de l'amidon thermoplastique.

En ce qui concerne l'amidon (B), il peut être de tout type. Si l'on souhaite obtenir une composition de plus bas coût, l'amidon préférentiellement utilisé pour la fabrication de la composition est un amidon granulaire, de préférence un amidon natif.

On entend ici par « amidon granulaire », un amidon natif ou modifié physiquement, chimiquement ou par voie enzymatique, ayant conservé, au sein des granules d'amidon, une structure semi-cristalline similaire à celle mise en évidence dans les grains d'amidon présents naturellement dans les organes et tissus de réserve des végétaux supérieurs, en particulier dans les graines de céréales, les graines de légumineuses, les tubercules de pomme de terre ou de manioc, les racines, les bulbes, les tiges et les fruits. A l'état natif, les grains d'amidon présentent généralement un taux de cristallinité qui varie de 15 à 45 %, et qui dépend essentiellement de l'origine botanique de l'amidon et du traitement éventuel qu'il a subi.

L'amidon granulaire, placé sous lumière polarisée, présente une croix noire caractéristique, dite croix de Malte, typique de l'état granulaire.

Selon l'invention, l'amidon peut provenir de toutes origines botaniques, y compris un amidon granulaire riche en amylose ou, inversement, riche en amylopectine (en anglais « waxy »). Il peut s'agir d'amidon natif de céréales telles que le blé, le maïs, l'orge, le triticale, le sorgo ou le riz, de tubercules tels que la pomme de terre ou le manioc, ou de légumineuses telles que le pois et le soja, et de mélanges de tels amidons.

L'amidon peut également être modifié, chimiquement ou physiquement.

Le plastifiant organique de l'amidon (C) a pour fonction de rendre l'amidon thermoplastique.

Il peut s'agir d'un plastifiant organique choisi parmi les diols et les polyols tels que le glycérol, les polyglycérols, les sorbitans, le sorbitol, le mannitol, et les sirops de glucose hydrogénés, l'urée, les polyéthers de masse molaire inférieure à 800 g/mol, et les mélanges quelconques de ces produits, de préférence le glycérol, le sorbitol ou un mélange de glycérol et de sorbitol.

Selon l'invention, la composition peut comprendre des quantités de plastifiant relativement importantes. Ainsi, avantageusement, le ratio massique amidon/plastifiant, exprimé en masse sèche, va de 90/10 à 40/60, par exemple de 85/15 à 40/60, avantageusement de 85/15 à 50/50, de préférence de 80/20 à 60/40. La gamme de 90/10 à 40/60 peut se décomposer en deux sous-gammes : une sous-gamme de 90/10 à 85/15 (borne 85/15 exclue) et une sous-gamme de 85/15 à 40/60. Selon un autre mode de réalisation préféré, le ratio massique amidon (B)/plastifiant organique (C), exprimé en masse sèche, va de 90/10 à 80/20, voire de 90/10 à 85/15 (borne 85/15 exclue). Selon ce mode, on préfère que le pourcentage massique de (D) par rapport à la masse de (A) et (D) soit faible. Les compositions de ce mode préféré permettent d'être transformées ultérieurement, par exemple sous forme de film, sans qu'il se produise d'émission de fumées lors de la transformation. Par ailleurs, les films obtenus présentent d'excellentes propriétés mécaniques, notamment lorsque la quantité de (D) est faible.

Même lorsque les quantités de plastifiant sont importantes, la composition selon l'invention peut être aisément transformée sous forme de film par extrusion soufflage de gaine. Elle peut notamment être transformée à haute cadence dans les variantes préférées. La composition présente alors également une souplesse plus importante.

Selon l'invention, la composition peut comprendre des quantités très variables d'amidon thermoplastique. Ainsi, la quantité massique totale de polyester (A) et de polyester additionnel optionnel (D) peut aller de 35 à 75 parts, ces quantités massiques étant exprimées par rapport à 100 parts de la matière sèche totale de (A), (B), (C) et (D). Elle peut comprendre une quantité massique totale de polyester (A) et de polyester additionnel optionnel (D) allant de 40 à 70 parts, avantageusement dans la gamme allant de 45 à 60 parts, de préférence dans la gamme allant de 48 à 58 parts.

La composition selon l'invention peut être caractérisée par une morphologie qui se présente sous la forme de domaines co-continus d'amidon thermoplastique et de polyester. La morphologie de la composition peut être observée par microscopie électronique à balayage.

Même lorsque les quantités d'amidon thermoplastique sont importantes, la composition selon l'invention peut être mise en forme de granulés, sans que ceux-ci forment des chapelets. Dans certaines proportions telles que celles définies précédemment, la morphologie de la composition présente des domaines co-continus de polyester et d'amidon thermoplastique. Ces compositions présentent une biodégradabilité améliorée par rapport à des compositions dont l'amidon thermoplastique est dispersé dans une phase continue de polyester.

Selon un autre mode préféré, la composition comprend une quantité massique totale de polyester (A) et de polyester additionnel optionnel (D) comprise dans la gamme allant de 60 à 75 parts, préférentiellement de 62 à 72 parts, ces quantités massiques étant exprimées par rapport à 100 parts de la masse sèche totale des constituants (A), (B), (C) et (D). Généralement, cette composition est caractérisée par une morphologie se présentant sous la forme de domaines d'amidon thermoplastique dispersés dans une matrice polyester. Selon ce mode les films obtenus à partir de ces compositions présentent des propriétés supérieures de résistance à la déchirure.

Selon l'invention, la composition comprend en outre de l'acide citrique (E), la quantité massique d'acide citrique allant de 0,01 à 0,45 part, cette quantité étant exprimée par rapport à 100 parts de la matière sèche totale de (A), (B), (C) et (D). Avantageusement, la composition comprend, par rapport à 100 parts de la matière sèche totale de (A), (B), (C) et (D), une quantité d'acide citrique de 0,05 à 0,3 part, préférentiellement de 0,06 à 0,20 part, tout préférentiellement de 0,07 à 0,15 part.

Comme indiqué précédemment, la présence d'acide citrique dans la composition permet d'en améliorer l'homogénéité et ainsi améliorer les propriétés de la composition. Dans les proportions d'acide citrique sélectionnées et particulièrement dans les proportions préférées, la composition est facile à granuler, en comparaison avec les compositions à base de polyester (A) et d'amidon thermoplastique comprenant des quantités plus importantes d'acide citrique.

La composition selon l'invention peut également comprendre des additifs ou des polymères additionnels (constituants additionnels) ou un mélange de ceux-ci.

La composition selon l'invention peut également comprendre en outre un agent de liaison différent de l'acide citrique, cet agent de liaison étant porteur de plusieurs fonctions susceptibles de réagir avec le polyester et/ou l'amidon et/ou le plastifiant organique de l'amidon, cette fonction pouvant être choisie parmi les fonctions acide carboxylique, ester d'acide carboxylique, isocyanate ou époxy.

La composition selon la présente invention peut aussi comprendre, comme autre additif ou constituant additionnel, des charges ou des fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de talc, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz. De préférence, pour 100 parts de (A), (B), (C) et (D), la composition comprend de 0,1 à 200 parts de charges et/ou fibres, cette quantité étant exprimée par rapport à la masse sèche des différents constituants, par exemple de 0,5 à 50 parts. La composition peut également être de type composite, c'est-à-dire comprendre de grandes quantités de ces charges et/ou fibres.

L'additif additionnel utile à la composition selon l'invention peut également être choisi parmi des agents opacifiants, des colorants et des pigments. Ils peuvent être choisis parmi l'acétate de cobalt et les composés suivants : HS-325 Sandoplast® RED BB (qui est un composé porteur d'une fonction azo également connu sous le nom Solvent Red 195), HS-510 Sandoplast® Blue 2B qui est une anthraquinone, Polysynthren® Blue R, et Clariant® RSB Violet.

La composition peut également comprendre comme additif un agent de procédé, ou *processing aid,* pour diminuer la pression dans l'outil de mise en oeuvre. Ces agents peuvent également avoir la fonction d'agents de démoulage permettant de réduire l'adhésion aux matériels de mise en forme de la composition, tels que les moules ou les cylindres de calandreuses. Ces agents peuvent être sélectionnés parmi les esters et les amides d'acide gras, les sels métalliques, les savons, les paraffines ou les cires hydrocarbonées. Des exemples particuliers de ces agents sont le stéarate de zinc, le stéarate de calcium, le stéarate d'aluminium, les stéaramides, l'érucamide, le béhénamide, les cires d'abeille ou de *candelilla.* De préférence, la composition comprend en outre un monoester d'acide gras et de glycérol, par exemple du monostéarate de glycérol. Selon cette variante préférée, cette composition permet la fabrication de films moins collants que des compositions exemptes de ce constituant. De préférence, la quantité massique en agent de procédé, et notamment de monoester d'acide gras et de glycérol, va de 0,05 à 1,7 part, par exemple de 0,3 à 1,65 part, avantageusement de 0,5 à 1,5 part, préférentiellement de 0,65 à 1,3 part, ces quantités étant exprimées par rapport à 100 parts de la matière sèche totale de (A), (B), (C) et (D).

La composition selon l'invention peut comprendre également d'autres additifs tels que les agents stabilisants, par exemple les agents stabilisants lumière, les agents stabilisants UV et les agents stabilisants thermiques, les agents fluidifiants, les agents retardateurs de flamme et les agents antistatiques. Elle peut également comprendre des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, UItranox®276, Dovernox® 10, Dovernox® 76, Dovernox® 3114, Irganox® 1010, Irganox® 1076. L'anti-oxydant secondaire peut être des composés phosphorés trivalents tels que Ultranox® 626, Doverphos® S-9228, Hostanox® P-EPQ, ou l'Irgafos® 168.

La composition peut comprendre en outre un polymère additionnel, différent des polyesters (A) et (D). Ce polymère peut être choisi parmi les polyamides, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

La composition peut également comprendre comme polymère additionnel un polymère permettant d'améliorer les propriétés au choc du polymère, notamment les polyoléfines fonctionnelles telles que les polymères et copolymères d'éthylène ou de propylène fonctionnalisés, des copolymères coeur-écorce ou des copolymères à bloc.

Les compositions selon l'invention peuvent également comprendre des polymères d'origine naturelle, tels que la cellulose, les chitosans, les alginates, les carraghénanes, l'agar-agar, les protéines telles que le gluten, les protéines de pois, la caséine, le collagène, la gélatine, la lignine, ces polymères d'origine naturelle pouvant ou non être modifiés physiquement ou chimiquement.

Selon une variante de l'invention, la composition comprend en masse sèche,:
- de 10 à 80 parts d'au moins un polyester (A), de préférence de 30 à 65 parts, tout préférentiellement de 30 à 50 parts;
- de 5 à 50 parts d'au moins un amidon (B), de préférence de 20 à 40 parts ;
- de 5 à 50 parts au moins un plastifiant organique (C) de l'amidon, de préférence de 10 à 35 parts ;
- optionnellement de 1 à 70 parts de polyester additionnel (D), de préférence de 5 à 35 parts ;
la somme des quantités de constituants (A), (B), (C) et (D) faisant 100 parts ;
la composition comprenant en outre :
- de 0,01 à 0,45 part d'acide citrique (E), avantageusement de 0,05 à 0,3 part, préférentiellement de 0,06 à 0,20 part, tout préférentiellement de 0,07 à 0,15 part ;
- optionnellement de 0,01 à 200 part de constituant(s) additionnel(s) choisis parmi les additifs et polymères, différent(s) de (A), (B), (C), (D) et (E).

La composition selon l'invention peut être fabriquée en utilisant un procédé de fabrication comprenant :
▪ une étape d'introduction a) dans un système mélangeur de constituants comprenant au moins un polyester (A) aliphatique tel que défini précédemment, au moins un amidon (B), au moins un plastifiant organique de l'amidon (C), optionnellement un ou plusieurs polyesters additionnels (D), au moins de l'acide citrique (E) et éventuellement de l'eau ;
▪ une étape de mélange b) dans laquelle les constituants sont mélangés de manière thermomécanique pour obtenir la composition thermoplastique ;
▪ une étape de récupération c) de la composition thermoplastique.

On peut évidemment faire varier les quantités des différents constituants de manière à obtenir les compositions décrites précédemment. Dans le cas où on utilise des constituants comprenant de l'humidité, l'Homme du métier peut aisément, afin de réaliser le procédé, déterminer les quantités massiques des différents constituants en masse humide à introduire dans le système mélangeur, en mesurant préalablement l'humidité dans chaque constituant, par exemple en effectuant un dosage utilisant la méthode de Karl-Fisher, ceci afin d'obtenir les compositions dans les proportions décrites précédemment. A titre d'illustration, on retrouve dans la partie Exemples la description de compositions exprimées en masse sèche, avec les quantités de chacun des constituants utilisés lors du procédé qui sont quant à elles exprimées en masse humide.

Pour préparer la composition, on peut notamment utiliser le procédé décrit dans le document WO 2010/010282A1.

Le système mélangeur peut comprendre un système de séchage, par exemple un système d'extraction des volatils tel qu'une pompe à vide. Dans ce cas, on peut diminuer l'humidité de la composition à l'issue du procédé, en comparaison à l'humidité totale dans les constituants introduits à l'étape a).

De préférence, l'humidité de la composition est ajustée de manière à être comprise entre 2,5 et 9% par rapport à la masse totale (donc humide) des constituants introduits à l'étape a).

Avantageusement, le procédé comprend au moins une étape de séchage, de manière à ce que l'humidité de la composition soit comprise entre 0,2 et 1,4%. De préférence, le mélange de l'étape b) est réalisé simultanément à l'étape de séchage, par exemple en connectant une pompe à vide au réacteur. Le procédé peut également comprendre une étape distincte de séchage, prenant place ultérieurement à l'étape de récupération c).

Selon l'invention, la température de mélange lors de l'étape b) va avantageusement de 90 à 210 °C, préférentiellement de 110 à 190°C.

Le mélange des constituants de la composition peut se faire sous atmosphère inerte.

En ce qui concerne le système mélangeur, il peut s'agir de mélangeurs internes à pales ou à rotors, de mélangeurs externes, d'extrudeuses mono-vis, bi-vis co-rotatives ou contrarotatives. De préférence, l'étape de mélange b) se fait dans une extrudeuse, notamment en utilisant une extrudeuse bi-vis co-rotative. Par extrusion, l'étape d'introduction a) des différents constituants de la composition peut se faire à l'aide de trémies d'introduction situées le long de l'extrudeuse.

Lorsque l'on réalise le mélange par extrusion, la composition récupérée à l'étape c) est sous forme d'un jonc de polymère.

De préférence, le procédé de fabrication comprend en outre une étape de granulation d) de la composition récupérée à l'étape c). A l'issue de cette étape de granulation d) sont obtenus des granulés de composition.

Cette étape de granulation peut se faire par tout type de granulateur, par exemple sous anneau d'eau, sous eau ou de joncs. La composition récupérée peut être granulée très aisément, ceci sans formation de chapelets.

L'invention porte également sur des granulés de la composition selon l'invention ou susceptible d'être obtenu par le procédé décrit ci-dessus.

L'invention porte également sur un article comprenant la composition selon l'invention.

Cet article peut être de tout type et être obtenu en utilisant les techniques classiques de transformation.

Il peut s'agir par exemple de fibres ou de fils utiles à l'industrie textile ou d'autres industries. Ces fibres ou fils peuvent être tissés pour former des tissus ou encore des non-tissés.

L'article selon l'invention peut également être un film, une feuille. Ces films ou feuilles peuvent être fabriqués par les techniques de calandrage, d'extrusion de film à plat, d'extrusion soufflage de gaine.

L'invention porte en particulier sur un procédé de fabrication de film par soufflage de gaine comprenant
- une étape d'extrusion de la composition ou de granulés selon l'invention pour former une composition fondue ;
- une étape de formation d'une gaine par soufflage de la composition fondue obtenue à l'étape précédente ;
- une étape de récupération d'un film.

Avantageusement, la vitesse de tirage est supérieure à 5 m/s, de préférence supérieure à 10 m/s. Les compositions selon l'invention, en particulier dans les variantes préférées permettent de garder d'excellentes cadences de production et d'obtenir des vitesses de tirage élevées, notamment lorsque la composition comprend de l'acide polylactique semi-cristallin comme polyester (D).

L'article selon l'invention peut aussi être un récipient pour transporter des gaz, des liquides ou/et des solides. Il peut s'agir de bouteilles, par exemple de bouteilles d'eau gazeuse ou non, de bouteilles de jus, de bouteilles de soda, de bombonnes, de bouteilles de boissons alcoolisées, de flacons, par exemple de flacons de médicament, de flacons de produits cosmétiques, des plats, par exemple pour plats cuisinés, de plats pour micro-ondes ou encore de couvercles. Ces récipients peuvent être de toute taille. Ils peuvent être fabriqués par extrusion soufflage, thermoformage ou injection soufflage.

Les articles peuvent également être des articles multicouches, dont au moins une couche comprend la composition selon l'invention. Ces articles peuvent être fabriqués par un procédé comprenant une étape de co-extrusion dans le cas où les matériaux des différentes couches sont mis en contact à l'état fondu. A titre d'exemple, on peut citer les techniques de co-extrusion de tube, co-extrusion de profilé, de co-extrusion soufflage (en anglais « blowmolding ») de bouteille, de flacon ou de réservoir, généralement regroupés sous le terme de co-extrusion soufflage de corps creux, co-extrusion gonflage appelée également soufflage de gaine (en anglais « film blowing ») et co-extrusion à plat (en anglais « cast coextrusion »).

Ils peuvent également être fabriqués selon un procédé comprenant une étape d'application d'une couche de composition à l'état fondu sur une couche à base de polymère organique, de papier, de métal ou de composition adhésive à l'état solide. Cette étape peut être réalisée par pressage, par surmoulage, stratification ou laminage (en anglais « lamination »), extrusion-laminage, couchage (en anglais « coating »), extrusion-couchage ou enduction.

L'invention va maintenant être illustrée dans les exemples ci-après. Il est précisé que ces exemples ne limitent en rien la présente invention.

### Exemples

### Constituants

Les constituants des différentes compositions exemplifiées sont présentés ci-dessous.

### Polyesters :

(A) : Polyester aliphatique de condensation d'acide succinique, d'acide adipique et de 1,4-butane diol, température de fusion de 95°C, d'indice de fluidité égal à 1,2 g/10 min
(D) : Poly (acide lactique) semi-cristallin (teneur en acide L-Lactique égale à 95,7 mol. %, teneur acide D-Lactique égale à 4,3% mol, température de fusion de 150°C, d'indice de fluidité égal à 2,6 g/10 min)
(B) :_Amidon de Blé (contenant 12,5% d'eau)
(C) : Plastifiant
   Plastifiant a : Mélange de glycérol et de sorbitol contenant 16% d'eau avec la répartition en masse sèche glycérol = 60%, Sorbitol = 40%
   Plastifiant b = Glycérol
(E) = Acide citrique

### Constituants additionnels/additifs

MGS = Monostéarate de glycérol

### Procédé de fabrication de la composition

Les compositions selon l'invention et comparatives ont été réalisées à l'aide d'une extrudeuse de marque Leistritz, ZSE27MAXX60D, Diamètre 28, Longueur L/D = 60, pour un débit de : 20 kg/h.
- Profil de température (quinze zones de chauffe Z1 à Z15, température en °C) : 20/60/60/80/90/110/130/130/180/160/180/150/130/130/130 avec une vitesse de vis variable de 200 tr/min à 400 tr//min.

Dans le cas où la composition envisagée comprend un polyester additionnel (D), on réalise un mélange physique des granulés des polyesters (A) et (D) préalablement à l'introduction dans l'extrudeuse.

Lors du procédé, on introduit dans l'extrudeuse :
- le mélange des polyesters (A) et (D) additionnel dans la trémie principale de l'extrudeuse, en suite de quoi ledit mélange traverse l'ensemble des zones de chauffe de l'extrudeuse,
- le plastifiant de l'amidon (C) au niveau de la zone Z3 (9 à 12 D),
- l'amidon, ainsi qu'éventuellement l'acide citrique et le monostéarate de glycérol au niveau de la zone Z4 (13 à 16 D).

Un vide partiel est appliqué en zone Z 9 (33-36 D) et en zone 11 (41-44 D) (vide de 100 mbar) permettant d'éliminer l'eau.

Les granulés sont obtenus par un système classique de granulation sous eau.

Les granulés sont séchés dans un sécheur à panier pendant 2 heures à 80°C. On effectue un dosage d'humidité par la méthode de Karl-Fisher. Toutes les compositions obtenues présentent une humidité d'environ 0,5%.

### Détail des compositions

Les compositions selon l'invention et comparatives ont été réalisées en utilisant le procédé décrit ci-dessus. Les quantités des différents constituants introduits dans l'extrudeuse figurent dans le Tableau 1. Les proportions de tous les constituants sont données par rapport à la masse humide de la somme des constituants (A), (B), (C) et (D) additionnel.

Afin de faciliter la lecture, il est précisé dans la colonne intitulée « TYPE » de chacun des Tableaux ci-dessous si la composition est une composition selon l'invention (EX) ou une composition comparative (CP).

**Tableau 1 : Proportion des constituants des compositions en masse humide introduits dans l'extrudeuse**

| Exemple | TYPE | (A) | (D) | (B) | (C) | (E) | (MGS) |
|---|---|---|---|---|---|---|---|
| 1 | CP | 44,28 | 0 | 33,43 | 22,29^{a} | 0 | 0 |
| 2 | EX | 44,28 | 0 | 33,43 | 22,29^{a} | 0,09 | 0 |
| 3 | EX | 44,28 | 0 | 33,43 | 22,29^{a} | 0,18 | 0 |
| 4 | EX | 44,28 | 0 | 33,43 | 22,29^{a} | 0,28 | 0 |
| 5 | CP | 44,28 | 0 | 33,43 | 22,29^{a} | 0,46 | 0 |
| 6 | CP | 44,28 | 0 | 33,43 | 22,29^{a} | 0,64 | 0 |
| 7 | CP | 44,28 | 0 | 33,43 | 22,29^{a} | 0,91 | 0 |
| 8 | CP | 31 | 13,28 | 33,43 | 22,29^{a} | 0 | 0,28 |
| 9 | EX | 31 | 13,28 | 33,43 | 22,29^{a} | 0,07 | 0,28 |
| 10 | EX | 31 | 13,28 | 33,43 | 22,29^{a} | 0,09 | 0,28 |
| 11 | EX | 31 | 13,28 | 33,43 | 22,29^{a} | 0,18 | 0,28 |
| 12 | EX | 31 | 13,28 | 33,43 | 22,29^{a} | 0,28 | 0,28 |
| 13 | CP | 37,03 | 15,87 | 30,62 | 16,49 ^{b} | 0 | 0,95 |
| 14 | CP | 33,52 | 14,36 | 33,88 | 18,24 ^{b} | 0 | 0,95 |
| 15 | CP | 32,12 | 13,77 | 35,17 | 18,94^{b} | 0 | 0,95 |
| 16 | CP | 30,04 | 12,87 | 37,11 | 19,98^{b} | 0 | 0,94 |
| 17 | CP | 26,59 | 11,4 | 40,31 | 21,71 ^{b} | 0 | 0,94 |
| 18 | EX | 37,03 | 15,87 | 30,62 | 16,49 ^{b} | 0,1 | 0,95 |
| 19 | EX | 33,52 | 14,36 | 33,88 | 18,24 ^{b} | 0,09 | 0,95 |
| 20 | EX | 32,12 | 13,77 | 35,17 | 18,94^{b} | 0,09 | 0,95 |
| 21 | EX | 30,04 | 12,87 | 37,11 | 19,98^{b} | 0,09 | 0,94 |
| 22 | EX | 26,59 | 11,4 | 40,31 | 21,71 ^{b} | 0,09 | 0,94 |

| | | | | | | | |
|---|---|---|---|---|---|---|---|
| ^{a}: Plastifiant a utilisé ^{b}: Plastifiant b utilisé | | | | | | | |

Dans le Tableau 2 sont exprimées les proportions en poids des différents constituants de la composition récupérée sous forme de granulés séchés, ces quantités étant exprimées par rapport à 100 parts de la masse sèche totale de (A), (B), (C) et (D).

**Tableau 2 : Proportion des constituants des compositions sèches**

| Composition | TYPE | (A) | (D) | (B) | (C) | (E) Acide citrique | Additif (MGS) |
|---|---|---|---|---|---|---|---|
| 1 | CP | 48 | 0 | 31,7 | 20,3^{a} | 0 | 0 |
| 2 | EX | 48 | 0 | 31,7 | 20,3^{a} | 0,1 | 0 |
| 3 | EX | 48 | 0 | 31,7 | 20,3^{a} | 0,2 | 0 |
| 4 | EX | 48 | 0 | 31,7 | 20,3^{a} | 0,3 | 0 |
| 5 | CP | 48 | 0 | 31,7 | 20,3^{a} | 0,5 | 0 |
| 6 | CP | 48 | 0 | 31,7 | 20,3^{a} | 0,7 | 0 |
| 7 | CP | 48 | 0 | 31,7 | 20,3^{a} | 1 | 0 |
| 8 | CP | 33,6 | 14,4 | 31,71 | 20,29^{a} | 0 | 0,3 |
| 9 | EX | 33,6 | 14,4 | 31,71 | 20,29^{a} | 0,08 | 0,3 |
| 10 | EX | 33,6 | 14,4 | 31,71 | 20,29^{a} | 0,1 | 0,3 |
| 11 | EX | 33,6 | 14,4 | 31,71 | 20,29^{a} | 0,2 | 0,3 |
| 12 | EX | 33,6 | 14,4 | 31,71 | 20,29^{a} | 0,3 | 0,3 |
| 13 | CP | 38,5 | 16,5 | 27,86 | 17,14^{b} | 0 | 1 |
| 14 | CP | 35 | 15 | 30,95 | 19,05^{b} | 0 | 1 |
| 15 | CP | 33,6 | 14,4 | 32,19 | 19,81 ^{b} | 0 | 1 |
| 16 | CP | 31,5 | 13,5 | 34,05 | 20,95 ^{b} | 0 | 1 |
| 17 | CP | 28 | 12 | 37,14 | 22,86^{b} | 0 | 1 |
| 18 | EX | 38,5 | 16,5 | 27,86 | 17,14^{b} | 0,1 | 1 |
| 19 | EX | 35 | 15 | 30,95 | 19,05^{b} | 0,1 | 1 |
| 20 | EX | 33,6 | 14,4 | 32,19 | 19,81 ^{b} | 0,1 | 1 |
| 21 | EX | 31,5 | 13,5 | 34,05 | 20,95 ^{b} | 0,1 | 1 |
| 22 | EX | 28 | 12 | 37,14 | 22,86^{b} | 0,1 | 1 |

| | | | | | | | |
|---|---|---|---|---|---|---|---|
| ^{a}: Plastifiant a utilisé ^{b}: Plastifiant b utilisé | | | | | | | |

### Caractérisation des compositions 1 à 7

Les exemples 1 à 7 démontrent les bénéfices de la composition selon l'invention : différentes compositions, qui diffèrent uniquement par la quantité d'acide citrique employé, sont ainsi comparées.

Les morphologies des compositions ont été observées au microscope électronique à balayage et les clichés des compositions 1, 3 et 7 sont reproduits à la Figure 1. La taille moyenne des canaux d'amidon thermoplastique est également déterminée à l'aide des clichés MEB et reportée dans le Tableau 3.

Les propriétés des compositions de ces exemples sont regroupées dans le Tableau 3.

**Tableau 3 : Effet de la quantité d'acide citrique employé sur la qualité de l'extrudat et sur la morphologie des compositions**

| Composition | TYPE | Granulation | Dépôt filière | Régularité du jonc | Diamètre moyen des canaux formés par la phase amidon plastifié |
|---|---|---|---|---|---|
| 1 | CP | ++ | ++ | -- | 2µm< <10µm |
| 2 | EX | ++ | ++ | - | 2µm< <7µm |
| 3 | EX | + | + | + | 1µm< <4µm |
| 4 | EX | + | + | + | 0µm< <3µm |
| 5 | CP | - | - | ++ | 0µm< <2µm |
| 6 | CP | - | - | ++ | 0µm< <1,5µm |
| 7 | CP | - | - | ++ | 0µm< <1,5µm |

| | | | | | |
|---|---|---|---|---|---|
| Granulation ++ : Aucun granulé collé + : quelques granulés collent les uns sur les autres - : agglomérats de granulés (chapelets) Dépôt filière ++ : Aucun dépôt + : Quelques dépôts - : Dépôts importants Régularité du jonc ++ : Lisse + : Quelques rugosités - : Rugueux -- : Très rugueux | | | | | |

Les compositions des exemples, dans lesquelles la quantité massique d'acide citrique varie de 0 à 1 part par rapport à 100 parts de la masse sèche totale de (A), (B), (C), et (D), montrent que :
- L'emploi d'acide citrique permet d'améliorer la compatibilité entre la phase polyester et la phase amidon plastifié. Cette meilleure compatibilité entre les phases est illustrée par la diminution de la taille des canaux formés par l'amidon plastifié. En effet, à teneur en amidon plastifié identique, plus les canaux sont fins, plus la surface de contact entre les phases polyester et amylacée est importante.
- Toutefois, ces résultats montrent qu'il n'est pas suffisant de diminuer la taille des domaines d'amidon thermoplastique pour améliorer les propriétés de la composition. L'emploi d'acide citrique a un fort impact sur les propriétés du polymère fondu en sortie d'extrudeuse. En effet, d'après le Tableau 3, l'utilisation d'acide citrique permet d'améliorer la régularité du jonc tout en réduisant fortement la présence de dépôt sur la filière. Mais l'acide citrique entraine également des difficultés à granuler quand il est employé dans des proportions de 0,5 part ou plus.

### Caractérisation des compositions 8 à 12

Ces compositions diffèrent des compositions décrites dans les exemples 1 à 7 en ce qu'elles contiennent un polyester additionnel (D) (l'acide polylactique). Les compositions 8 à 12 diffèrent entre elles par le choix de la quantité d'acide citrique employé.

Dans le Tableau 4 est indiquée la capacité du jonc obtenu après extrusion à être granulé.

Les granulés des compositions sont transformés en films sur une extrudeuse souffleuse de marque COLLIN (Diamètre 20, Longueur L/D = 18, cinq zones de chauffe Z1 à Z5) en utilisant le profil de température suivant (160°C/160°C /160°C /160°C /160°C) et vitesse de vis de 60 tours par minute.

Dans le Tableau 4 figure également la vitesse maximale de fabrication de film de la composition, celle-ci étant déterminée par rapport à la vitesse maximale de fonctionnement de l'extrudeuse gonfleuse. Les propriétés mécaniques et l'aspect des films obtenus ont également été caractérisés et reportés. Par film hétérogène, on entend un film dont l'épaisseur et/ou la translucidité du film est variable ; par film homogène, on entend un film présentant une épaisseur et une translucidité constante.

Tableau 4 : Effet de la quantité d'acide citrique employé : comportement lors de la mise en oeuvre par extrusion gonflage et propriétés mécaniques des compositions sous forme d'éprouvettes découpées dans un film de 50µm.

| Composition | TYPE | Granulation | Vitesse de mise en oeuvre (m/s) | Aspect du film | Filmabilité globale | Module (MPa) | Allongement à la rupture (%) | Contrainte à la rupture (MPa) |
|---|---|---|---|---|---|---|---|---|
| 8 | CP | ++ | 13 | Film hétérogène | - | Film mauvais, pas de mesure de propriétés mécaniques | | |
| 9 | EX | ++ | 13 | Film homogène | + | 299 | 278 | 20.8 |
| 10 | EX | ++ | 13 | Film hoomogène | ++ | 294 | 268 | 18 |
| 11 | EX | + | 9,5 | Film homogène | 0 | 246 | 199 | 15.3 |
| 12 | EX | + | 6 | Film homogène | 0 | 241 | 184 | 14.7 |

| | | | | | | | | |
|---|---|---|---|---|---|---|---|---|
| Notation de la filmabilité ++ : Aucun problème de stabilité de bulle + : Pas de problème de stabilité après réduction de la vitesse de mise en oeuvre 0 : Bulle légèrement instable après réduction de la vitesse de mise en oeuvre - : Bulle instable même après réduction de la vitesse de mise en oeuvre | | | | | | | | |

Les compositions des exemples 8 à 12, dans lesquelles la teneur en acide citrique varie de 0 à 0,3 part en masse par rapport à 100 parts de la masse sèche totale de (A), (B), (C), et (D), montrent que :
- L'emploi d'acide citrique entraine une diminution des valeurs de module et d'allongement à la rupture à partir de 0,2 part. Pour des teneurs inférieures à 0,2 part d'acide citrique, les propriétés mécaniques sont stables.
- L'emploi d'acide citrique à un taux supérieur ou égal à 0,2 part provoque une diminution de la vitesse de mise en oeuvre du film. Par ailleurs, la non-utilisation d'acide citrique entraine la formation d'un film très hétérogène.

L'emploi d'acide citrique dans des proportions comprises entre 0,08 et 0,18 part permet, pour les formules décrites dans les exemples 8 à 12, d'obtenir les meilleures qualités de granulation, de mise en oeuvre et de propriétés d'usage des films.

### Caractérisation des compositions 13 à 22

Les compositions des exemples 13 à 22 diffèrent des compositions décrites dans les exemples 1 à 12 en ce que le plastifiant de l'amidon employé est du glycérol. Ces compositions diffèrent entre elles par 1) la quantité d'amidon plastifié employé ainsi que 2) le taux d'acide citrique.

Ces compositions ont été transformées sous forme de film selon le protocole décrit précédemment. Dans le Tableau 5 figure la vitesse maximale de fabrication de film de la composition. Les propriétés mécaniques et l'aspect des films obtenus ont également été caractérisés et reportés.

**Tableau 5 : Effet des quantités d'amidon plastifié et d'acide citrique employées**

| Composition | TYPE | Vitesse de mise en oeuvre (m/s) | Aspect du film | Filmabilité globale | Module (MPa) | Allongement à la rupture (%) | Contrainte à la rupture (MPa) |
|---|---|---|---|---|---|---|---|
| 13 | CP | 13 | Film hétérogène | Mauvaise | 149 | 263 | 17 |
| 14 | CP | 13 | Film hétérogène | Mauvaise | 131 | 195 | 16 |
| 15 | CP | 4,5 | Film hétérogène | Mauvaise | Film mauvais, pas de mesure de propriétés mécaniques | | |
| 16 | CP | 4,5 | Film hétérogène | Mauvaise | | | |
| 17 | CP | 2,3 | Film hétérogène | Mauvaise | | | |
| 18 | EX | 13 | Film homogène | Excellente | 250 | 405 | 35 |
| 19 | EX | 13 | Film homogène | Excellente | 235 | 475 | 34 |
| 20 | EX | 13 | Film homogène | Excellente | 203 | 325 | 31 |
| 21 | EX | 13 | Film homogène | Excellente | 166 | 290 | 23 |
| 22 | EX | 11 | Film homogène | Moyenne | 147 | 265 | 18 |

Les compositions du Tableau 5, dans lesquelles la quantité massique d'acide citrique est de 0 ou 0,1 part et la teneur en amidon plastifié varie de 45 parts à 60 parts, ces quantités ou teneurs étant exprimées par rapport à 100 parts de la matière sèche totale de (A), (B), (C) et (D), montrent que :
- L'emploi d'acide citrique à hauteur de 0,1 part permet d'obtenir une très bonne filmabilité des formulations contenant entre 45% et 55 parts d'amidon plastifié ou de rendre une composition comprenant 60 parts d'amidon thermoplastique filmable.
- A teneur en amidon plastifié identique, l'utilisation d'acide citrique à 0,1 part entraine une forte amélioration des propriétés mécaniques du film (augmentation du module, de l'allongement et de la contrainte à la rupture) et de son aspect (film homogène).

### Conclusion

Sur la base des résultats analytiques des compositions exemptes de polyester additionnel (D) (Tableau 3), il apparait que l'emploi d'acide citrique permet d'améliorer la compatibilité des phases amylacées et polyester. Il permet d'améliorer également la qualité et l'homogénéité du jonc en sortie d'extrusion et ainsi l'aspect des granulés. Toutefois, en présence de 0,3 part ou plus d'acide citrique, la granulation du matériau est plus difficile voire impossible.

Sur la base des résultats analytiques des compositions comprenant le polyester additionnel (D) (Tableau 4), l'utilisation de l'acide citrique dans des proportions supérieures ou égales à 0,2 part entraine une diminution importante de la capacité du matériau à être filmé à haute cadence.

Sur la base des résultats analytiques des compositions 13 à 22 (Tableau 5), il apparait clairement que l'emploi d'acide citrique à hauteur de 0,1 part entraine une amélioration importante de la qualité et des propriétés mécaniques des films extrudés, cela sur une large plage de teneurs en amidon plastifié.

## Revendications

1. Composition comprenant :
• au moins un polyester (A) aliphatique comprenant des diols contenant au moins l'éthylène glycol, le 1,4-butanediol ou leurs mélanges et des diacides contenant au moins l'acide succinique, l'acide adipique ou leurs mélanges ;
• au moins un amidon (B) ;
• au moins un plastifiant organique (C) de l'amidon ;
• optionnellement un polyester additionnel ou un mélange de polyesters additionnels (D) différents du polyester (A) ;
**caractérisée en ce que** la composition comprend en outre de l'acide citrique (E), la quantité massique d'acide citrique allant de 0,01 à 0,45 part par rapport à 100 parts de la masse sèche totale de (A), (B), (C) et (D).

2. Composition selon la revendication précédente, **caractérisée en ce que** la quantité massique d'acide citrique (E) va de 0,05 à 0,3 part, préférentiellement de 0,06 à 0,20 part, tout préférentiellement de 0,07 à 0,15 part par rapport à 100 parts de la masse sèche totale de (A), (B), (C) et (D).

3. Composition selon l'une des revendications précédentes, **caractérisée en ce qu'**elle comprend en outre le polyester additionnel ou le mélange de polyesters additionnels (D), préférentiellement l'acide polylactique.

4. Composition selon la revendication précédente, **caractérisée en ce que** le pourcentage massique de (D), par rapport à la masse de (A) et (D), exprimé en masse sèche, va de 2 à 70%, avantageusement de 10 à 50%, de préférence de 18 à 30%.

5. Composition selon l'une des revendications précédentes, **caractérisée en ce que** la quantité massique totale de polyester (A) et de polyester additionnel (D) comprise dans la gamme allant de 35 à 75 parts, par exemple allant de de 40 à 70 parts, avantageusement dans la gamme allant de 45 à 60 parts, de préférence dans la gamme allant de 48 à 58 parts, ces quantités massiques étant exprimées par rapport à 100 parts de la masse sèche totale des constituants (A), (B), (C) et (D).

6. Composition selon l'une des revendications précédentes, **caractérisée en ce qu'**elle comprend en outre un monoester d'acide gras et de glycérol, par exemple du monostéarate de glycérol.

7. Composition selon l'une des revendications précédentes, **caractérisée en ce que** le ratio massique amidon/plastifiant, exprimé en masse sèche, va de 90/10 à 40/60, avantageusement de 85/15 à 50/50, de préférence de 80/20 à 60/40.

8. Composition selon l'une des revendications précédentes, **caractérisée en ce que** le plastifiant organique est choisi parmi les diols et les polyols tels que le glycérol, les polyglycérols, les sorbitans, le sorbitol, le mannitol, et les sirops de glucose hydrogénés, l'urée, les polyéthers de masse molaire inférieure à 800 g/mol, et les mélanges quelconques de ces produits, de préférence le glycérol, le sorbitol ou un mélange de glycérol et de sorbitol.

9. Composition selon l'une des revendications précédentes, **caractérisée en ce que** sa morphologie se présente sous la forme de domaines co-continus d'amidon thermoplastique et de polyester.

10. Procédé de fabrication d'une composition selon l'une des revendications précédentes, **caractérisé en ce qu'**il comprend :
▪ une étape d'introduction a) dans un système mélangeur de constituants comprenant au moins un polyester (A) aliphatique comprenant des diols contenant au moins l'éthylène glycol, le 1,4-butanediol ou leurs mélanges et des diacides contenant au moins l'acide succinique, l'acide adipique ou leurs mélanges, au moins un amidon (B), au moins un plastifiant organique de l'amidon (C), optionnellement un ou plusieurs polyesters additionnels (D), de l'acide citrique (E) et éventuellement de l'eau ;
▪ une étape de mélange b) dans laquelle les constituants sont mélangés de manière thermomécanique pour obtenir la composition thermoplastique ;
▪ une étape de récupération c) de la composition thermoplastique.

11. Procédé selon la revendication 10, **caractérisé en ce que** :
• la quantité d'eau est ajustée pour que l'humidité des constituants introduits à l'étape a) soit comprise entre 2,5 et 9% ;
• le mélange de l'étape b) est réalisé simultanément avec un séchage, de manière à ce que l'humidité de la composition récupérée à l'étape c) soit comprise entre 0,2 et 1,4%.

12. Procédé selon l'une des revendications 10 et 11, **caractérisé en ce que** la température de mélange lors de l'étape b) va de 90 à 210 °C, avantageusement de 110 à 190 °C.

13. Procédé selon l'une des revendications 10 à 12, **caractérisé en ce que** le système mélangeur est une extrudeuse.

14. Procédé selon la revendication précédente, **caractérisé en ce qu'**il comprend en outre une étape de granulation d) de la composition récupérée à l'étape c).

15. Granulé d'une composition selon l'une des revendications 1 à 9 ou susceptible d'être obtenu par le procédé selon la revendication 14.

## Patentansprüche

1. Zusammensetzung, umfassend:
* wenigstens einen aliphatischen Polyester (A), welcher Diole umfasst, die wenigstens Ethylenglykol, 1,4-Butanediol oder deren Mischungen enthalten, sowie Disäuren, die wenigstens Bernsteinsäure, Adipinsäure oder deren Mischungen enthalten;
* wenigstens eine Stärke (B);
* wenigstens einen organischen Weichmacher (C) der Stärke;
* optional einen zusätzlichen Polyester oder eine Mischung zusätzlicher Polyester (D), die von Polyester (A) verschieden sind;
**dadurch gekennzeichnet, dass** die Zusammensetzung ferner Zitronensäure (E) umfasst, wobei die Gewichtsmenge 0,01 bis 0,45 Teile pro 100 Teile Gesamttrockenmasse von (A), (B), (C) und (D) beträgt.

2. Zusammensetzung nach dem vorhergehenden Anspruch, **dadurch gekennzeichnet, dass** die Gewichtsmenge Zitronensäure (E) 0,05 bis 0,3 Teile, bevorzugt 0,06 bis 0,20 Teile, besonders bevorzugt 0,07 bis 0,15 Teile pro 100 Teile Gesamttrockenmasse von (A), (B), (C) und (D) beträgt.

3. Zusammensetzung nach einem der vorhergehenden Ansprüche, **dadurch gekennzeichnet, dass** sie ferner den zusätzlichen Polyester oder die Mischung zusätzlicher Polyester (D) umfasst, bevorzugt Polymilchsäure.

4. Zusammensetzung nach dem vorhergehenden Anspruch, **dadurch gekennzeichnet, dass** die Gewichtsprozent von (D) bezogen auf das Gewicht von (A) und (D), als Trockenmasse ausgedrückt, 2 bis 70 % betragen, vorteilhafterweise 10 bis 50 %, bevorzugt 18 bis 30 %.

5. Zusammensetzung nach einem der vorhergehenden Ansprüche, **dadurch gekennzeichnet, dass** das Gesamtgewicht des Polyesters (A) und des zusätzlichen Polyesters (D) 35 bis 75 Teile, zum Beispiel 40 bis 70 Teile, vorteilhafterweise 45 bis 60 Teile, bevorzugt 48 bis 58 Teile beträgt, wobei die Gewichtsmengen bezogen auf 100 Teile Gesamttrockenmasse der Bestandteile (A), (B), (C) und (D) ausgedrückt werden.

6. Zusammensetzung nach einem der vorhergehenden Ansprüche, **dadurch gekennzeichnet, dass** sie ferner einen Monoester von Fettsäure und Glycerol umfasst, beispielsweise Glycerolmonostearat.

7. Zusammensetzung nach einem der vorhergehenden Ansprüche, **dadurch gekennzeichnet, dass** das Gewichtsverhältnis Stärke/Weichmacher, ausgedrückt als Trockenmasse, 90/10 bis 40/60 beträgt, vorteilhafterweise 85/15 bis 50/50, bevorzugt 80/20 bis 60/40.

8. Zusammensetzung nach einem der vorhergehenden Ansprüche, **dadurch gekennzeichnet, dass** der organische Weichmacher gewählt ist aus: Diolen und Polyolen, wie zum Beispiel Glycerol, aus Polyglycerolen, Sorbitanen, Sorbitol, Mannitol und hydriertem Glucosesirup, Harnstoff, Polyether mit einem Molgewicht kleiner 800 g/mol, und beliebigen Mischungen dieser Produkte, bevorzugt Glycerol, Sorbitol oder aus einer Mischung von Glycerol und Sorbitol.

9. Zusammensetzung nach einem der vorhergehenden Ansprüche, **dadurch gekennzeichnet, dass** ihre Morphologie in Form von gemeinsam fortgeführten Bereichen thermoplastischer Stärke und von Polyester vorliegt.

10. Herstellungsverfahren für eine Zusammensetzung nach einem der vorhergehenden Ansprüche, **dadurch gekennzeichnet, dass** es umfasst:
* einen Schritt der Einführung a) in ein Mischsystem von Bestandteilen, die wenigstens einen aliphatischen Polyester (A) umfassen, welcher Diole umfasst, die wenigstens Ethylenglykol, 1,4-Butanedial oder deren Mischungen enthalten, und Disäuren, die wenigstens Bernsteinsäure, Adipinsäure oder deren Mischungen enthalten, wenigstens eine Stärke (B), wenigstens einen organischen Weichmacher (C) der Stärke, optional einen oder mehrere zusätzliche Polyester (D), Zitronensäure (E) und gegebenenfalls Wasser;
* einen Mischschritt b), in welchem die Bestandteile thermomechanisch gemischt werden, um die thermoplastische Zusammensetzung zu erhalten;
* einen Schritt der Gewinnung c) der thermoplastischen Zusammensetzung.

11. Verfahren nach Anspruch 10, **dadurch gekennzeichnet, dass**:
* die Wassermenge so angepasst wird, dass die Feuchtigkeit der in Schritt a) eingeführten Bestandteile zwischen 2,5 und 9 % liegt;
* die Mischung in Schritt b) gleichzeitig mit einer Trocknung durchgeführt wird, so dass die Feuchtigkeit der in Schritt c) gewonnenen Zusammensetzung zwischen 0,2 und 1,4 % liegt.

12. Verfahren nach einem der Schritte 10 und 11, **dadurch gekennzeichnet, dass** die Mischungstemperatur bei Schritt b) 90-210 °C, vorteilhafterweise 110-190 °C beträgt.

13. Verfahren nach einem der Ansprüche 10 bis 12, **dadurch gekennzeichnet, dass** das Mischsystem ein Extruder ist.

14. Verfahren nach dem vorangehenden Anspruch, **dadurch gekennzeichnet, dass** es ferner einen Schritt der Granulation d) der in Schritt c) gewonnenen Zusammensetzung umfasst.

15. Granulat einer Zusammensetzung nach einem der Ansprüche 1 bis 9 oder welche durch das Verfahren nach Anspruch 14 erhalten werden kann.

## Claims

1. A composition comprising:
- at least one aliphatic polyester (A) comprising diols containing at least ethylene glycol, 1,4-butanediol or mixtures thereof, and diacids containing at least succinic acid, adipic acid or mixtures thereof;
- at least one starch (B);
- at least one organic plasticizer (C) of the starch;
- optionally an additional polyester or a mixture of additional polyesters (D) different from the polyester (A);
**characterized in that** the composition further comprises citric acid (E), the mass amount of citric acid ranging from 0.01 to 0.45 parts per 100 parts of the total dry weight of (A), (B), (C) and (D).

2. A composition according to the preceding claim, **characterized in that** the mass amount of citric acid (E) is from 0.05 to 0.3 parts, preferably from 0.06 to 0.20 parts, most preferably 0.07 to 0.15 parts per 100 parts of the total dry weight of (A), (B), (C) and (D).

3. A composition according to one of the preceding claims, **characterized in that** it further comprises the additional polyester or the mixture of additional polyesters (D), preferably polylactic acid

4. A composition according to the preceding claim, **characterized in that** the percentage by mass of (D), relative to the weight of (A) and (D), expressed as dry weight, is from 2 to 70%, preferably from 10 to 50%, more preferably from 18 to 30%.

5. A composition according to one of the preceding claims, **characterized in that** the total quantity by weight of polyester (A) and additional polyester (D) is comprised in the range from 35 to 75 parts, for example, ranging from 40 to 70 parts, preferably in the range of from 45 to 60 parts, more preferably in the range from 48 to 58 parts, these mass amounts being expressed per 100 parts of total dry weight of components (A), (B), (C) and (D).

6. A composition according to one of the preceding claims, **characterized in that** it further comprises a fatty acid monoester of glycerol, for example glycerol monostearate.

7. A composition according to one of the preceding claims, **characterized in that** the starch/plasticizer mass ratio, expressed as dry weight, is from 90/10 to 40/60, preferably 85/15 to 50/50, more preferably from 80/20 to 60/40.

8. A composition according to one of the preceding claims, **characterized in that** the plasticizer is selected from organic diols and polyols such as glycerol, polyglycerol, sorbitans, sorbitol, mannitol, and hydrogenated glucose syrups, urea, polyethers with a molar mass of less than 800 g/mol, and any mixtures thereof, preferably glycerol, sorbitol or a mixture of glycerol and sorbitol.

9. A composition according to one of the preceding claims, **characterized in that** the morphology thereof is present as co-continuous domains of thermoplastic starch and pol yester.

10. A method of manufacturing a composition according to one of the preceding claims, **characterized in that** it comprises:
- a step of introducing a), in a mixer system, constituents comprising at least one aliphatic polyester (A) comprising diols containing at least ethylene glycol, 1,4-butanediol or mixtures thereof, and diacids containing at least succinic acid, adipic acid or mixtures thereof, at least one starch (B) at least one organic plasticizer of the starch (C), optionally one or more additional polyesters (D), citric acid (E) and optionally water;
- a mixing step b) wherein the components are thermomechanically mixed to obtain the thermoplastic composition;
- a step c) of recovering the thermoplastic composition.

11. Process according to Claim 10, **characterized in that**:
- the amount of water is adjusted so that the moisture of the constituents introduced in step a) is between 2.5 and 9%;
- the mixing of step b) is carried out simultaneously with drying so that moisture from the composition recovered in step c) is between 0.2 and 1.4%.

12. A method according to one of claims 10 to 11, **characterized in that** the mixing temperature in step b) is from 90 to 210°C, preferably from 110 to 190°C.

13. A method according to one of claims 10 to 12, **characterized in that** the mixing system is an extruder.

14. A method according to the preceding claim, **characterized in that** it further comprises a granulation step d) of the composition recovered in step c).

15. A granulate of a composition according to one of claims 1 to 9 or obtainable by the method according to claim 14.
